# EUROPÄISCHE PATENTSCHRIFT

(11) **EP 1 755 762 B1**
(45) Veröffentlichungstag und Bekanntmachung des Hinweises auf die Patenterteilung: **05.12.2012**
(21) Anmeldenummer: 05715722.4
(22) Anmeldetag: 04.03.2005
(51) Int. Cl.: B01D 35/30, B01D 29/96

(54) **FILTERVORRICHTUNG UND FILTERELEMENT**
FILTERING APPARATUS AND FILTER ELEMENT
DISPOSITIF FILTRANT ET ELEMENT FILTRANT

(30) Priorität: 17.06.2004 DE 102004029225
(43) Veröffentlichungstag der Anmeldung: 28.02.2007
(73) Patentinhaber: HYDAC FILTERTECHNIK GMBH, 66280 Sulzbach (DE)
(72) Erfinder: MAURER, Patrick, 66280 Sulzbach (DE); SANN, Norbert, 66292 Riegelsberg (DE)
(74) Vertreter: Bartels, Martin Erich Arthur
(86) Internationale Anmeldenummer: PCT/EP2005/002281
(87) Internationale Veröffentlichungsnummer: WO 2005/123216

(56) Entgegenhaltungen:
- DE-A1- 19 904 981
- GB-A- 589 457
- GB-A- 1 253 354
- US-A- 4 057 502
- US-A- 5 552 057
- US-B1- 6 245 701

## Beschreibung

Die Erfindung betrifft eine Filtervorrichtung mit einem topfartigen Filtergehäuse und einem in diesem aufnehmbaren Filterelement mit mindestens einer Endkappe gemäß der Merkmalsausgestaltung des Oberbegriffes des Patentanspruches 1.

Die Erfindung betrifft des weiteren ein für die Filtervorrichtung vorgesehenes Filterelement gemäß der Merkmalsausgestaltung des Oberbegriffes des Patentanspruches 7.

Filtervorrichtungen zur Aufnahme von Filterelementen sind in einer Vielzahl von Ausführungsformen auf dem Markt frei erhältlich. Ein nicht unbedeutender Anteil der Herstellungskosten entfällt bei derartigen Filtervorrichtungen auf die Ausbildung einer Halteeinrichtung zur lösbaren Fixierung des Filterelementes innerhalb des zugehörigen Gehäuses sowie auf eine Dichteinrichtung zum Abdichten des Inneren des Filterelementes gegenüber dem Filtergehäuse.

Bei einer in der EP 0 891 214 B1 aufgezeigten Filtervorrichtung weist die Halteeinrichtung eine Federanordnung aus zwei einander entgegenwirkenden Druckfedern auf, durch deren resultierende Federkraft ein am Filterelement angeordnetes Endstück, das als Dicht- und Halteelement fungiert, auf ein gehäuseseitiges Halteelement, das einen Fluidanschlußstutzen ausbildet, aufgeschoben wird, das durch einen sich in das Stützrohr des Filterelementes erstreckenden Stutzen am Kopf des Filtergehäuses gebildet ist. Die verhältnismäßig aufwendige Bauweise der bekannten Halteeinrichtung führt zu hohen Herstellungskosten und die bekannte Lösung erweist sich insoweit als wenig montagefreundlich, als das Filterelement ungewollt vom Anschlußstutzen rutschen oder an dieser Stelle beim Aufsetzen verkanten kann, was zu einer Beeinträchtigung der Dichtwirkung der Dichteinrichtung führt. Bei der bekannten Lösung weist die Dichteinrichtung einen O-Dichtring, vorzugsweise aus Kautschukmaterial, auf, der in einer radialen Innenausnehmung innerhalb der Endkappe des Filterelementes festgelegt ist und dergestalt radial die Abdichtung gegenüber der Außenumfangsseite des Fluid-Anschlußstutzens des Gehäusedeckels oder des Filterkopfes vornimmt. Die dahingehend bekannte Dichteinrichtung mit O-Ring ist nicht für alle Fluidmedien geeignet, beispielsweise nicht für alle Hydraulikflüssigkeiten, schwer entflammbare Flüssigkeiten, aggressive Medien und für spezielle biologisch abbaubare Flüssigkeiten. In Abhängigkeit des chemischen Aufbaues des jeweiligen Mediums kann eine lang andauernde Abdichtfunktion nicht gewährleistet werden.

Gegenstand des DE-U-299 22 488 ist ein montagefreundlicher Flüssigkeitsfilter mit Adapter mit einem topfartigen Filtergehäuse und mit einem das Filtergehäuse verschließenden, abnehmbaren Deckel sowie mit einem die eigentliche Filterfläche aufweisenden, auswechselbaren Filtereinsatz, wobei der Filtereinsatz lösbar mit dem Deckel als Filterkopf des Gehäuses verbunden ist. Des weiteren weist die bekannte Lösung einen sich in den Filtereinsatz erstreckenden Stützdorn als Anschlußstutzen einer Halteeinrichtung auf, wobei im Filtergehäuse als Adapter bezeichnete Anschluß- und Haltemittel für den Stützdorn vorgesehen sind, die in der Art von Haltefingern als Halteelemente ausgebildet sind. Der Stützdorn ist bei der bekannten Lösung im Filtereinsatz lösbar gehalten, wobei eine erste Montagebaugruppe den Deckel, den Filtereinsatz und den Stützdorn aufweist und eine zweite Montagebaugruppe das Filtergehäuse und den Adapter mit den Haltefingern. Während der Montage der beiden Montagebaugruppen ist dann der Adapter mit dem Stützdorn fest verbunden und beim Wechsel des Filtereinsatzes verbleibt der Stützdorn im Filtergehäuse. Auch insoweit kann es zu Montageschwierigkeiten (Abrutschen, Verkanten) kommen, wenn das Filterelement auf den Stützdorn beispielsweise bei einem Filterwechsel vor Ort aufzuschieben ist mit der nachteiligen Folge, dass die Dichtwirkung einer Dichteinrichtung beeinträchtigt ist, die wiederum aus einem O-Ring gebildet in radialer Richtung die Abstützung zwischen Stützdorn des Filtergehäuses und der Innenumfangsseite des Filterelementes vornimmt. Obwohl zusätzlich der Stützdorn als Bestandteil der Halteeinrichtung in axialer Längsausrichtung parallel zur Längsachse des Filterelementes an seinem unteren Fußteil in einer Aufnahmenut einen weiteren Dichtring aufweist, der keiner weiteren mechanischen Beanspruchung unterliegt, ist jedenfalls, wie vorstehend beschrieben, insoweit die Dichtwirkung der Dichteinrichtung zwischen Filterelement und Stützdorn als Gehäuseteil beeinträchtigt.

Durch die EP1 287 871 A1 ist eine weitere Filtervorrichtung bekannt. Als Halteelemente bei der bekannten Filtervorrichtung dienen eine am Filtergehäuse befindliche Aufnahme mit einer zumindest eine Rastfläche bildenden Hinterschneidung und an einem Ende des Filterelementes vorstehende nachgiebige Haltefinger mit Rastnasen, die durch Verrasten mit der Rastfläche der Aufnahme eine lösbare Schnappverbindung bilden. Dergestalt läßt sich ein Einbau und ein Austausch von Filterelementen durch einfaches Einrasten bzw. Lösen mittels der Schnappverbindung vornehmen, wobei es genügt, ein betreffendes Filterelement axial im Filtergehäuse in Richtung auf den Topfboden bis zum Einschnappen der Schnappverbindung zu bewegen oder zum Ausbau aus dem topfartigen Gehäuse einfach herauszuziehen. Mit der bekannten Lösung ist auch im Sinne einer Unverwechselbarkeitseinrichtung erreicht, dass nur speziell für die Filtervorrichtung vorgesehene Filterelemente für eine Funktionsaufnahme einsetzbar sind und beispielsweise keine anderen Elemente, die gegebenenfalls als Billigelemente ausgebildet den funktionssicheren Gebrauch der Filtervorrichtung in Frage stellen könnten.

Am gegenüberliegenden Ende des Filterelementes mit Teilen der Halteeinrichtung weist die Endkappe des Filterelementes einen Fluidanschlußstutzen auf, der auf ein Anschlußstutzenteil im Gehäusedeckel oder Filterkopf aufschiebbar ist. Als Dichteinrichtung dient wiederum ein O-Dichtring, der sich zwischen den Stutzenteilen von Deckelteil und Filterelement in radialer Richtung erstreckt. Auch insoweit gelten die bereits beschriebenen Nachteile für die bekannte Filtervorrichtung nach der genannten Europäischen Schrift.

Durch die US-A-5 552 057 ist eine Filtervorrichtung nebst Filterelement bekannt, wobei die Filtervorrichtung ein topfartiges Filtergehäuse aufweist mit einem in diesem aufnehmbaren Filterelement. Ferner weist die bekannte Lösung eine Halteeinrichtung auf, die an der Innenseite des Filtergehäuses und am Filterelement ausgebildete, miteinander zusammenwirkende Halteelemente aufweist. Eine Dichteinrichtung, die zwischen einem Gehäusedeckel des Filtergehäuses und dem Filterelement eingesetzt ist, nimmt die Abdichtung vor. Die Dichteinrichtung ist als separates Bauteil auf die Endkappe des Filterelementes stirnseitig aufgesteckt und bildet eine Dichtfläche aus, die in axialer Richtung parallel zur Längsachse angeordnet unter dem Einfluß der Halteeinrichtung verpreßt die Abdichtung vornimmt.

Durch die US-B1-6 245 701 ist eine gattungsgemäße Filtervorrichtung nebst Filterelement bekannt, bei der das Filterelement an seiner einen Endkappenseite entlang einer Aufschraubstrecke eines separaten Anschlußstutzens festgelegt ist, wobei der Anschlußstutzen an seinem zur Umgebung hinweisenden freien Ende gleichfalls eine weitere Einschraubstrecke aufweist; im Filteraufnahmegehäuse jedoch ohne eine solche Einschraubstrecke mittels einer separaten Elastomerdichtung im Vorrichtungsgehäuse gehalten ist und dergestalt das Filterelement im Gehäuse in dichtender Weise festlegt. Auch insoweit ist durch diesen Stand der Technik vergleichbar der vorstehend bezeichneten Anordnung im Bereich der Endkappe für eine Abdichtung des Filterelementes gegenüber dem Gehäuse eine eigenständige Dichtung vorgesehen, die aus einem anderen Material besteht als die verwendete Endkappe und insbesondere aus einem Elastomermaterial gebildet ist. Ferner durchgreift der separate Ansschlusstutzen mit seinen Einschraubstrecken sowohl die Endkappe des Filterelementes als auch den Gehäusedeckel des topfartigen Filtergehäuses, wobei die aus drei einzelnen Dichtringen bestehende Dichteinrichtung außerhalb der genannten Einschraubstrecken angeordnet ist.

Des Weiteren ist durch die GB-A-1 253 354 in Übereinstimmung mit kennzeichnenden Merkmalen des Patentanspruchs 1 es bekannt, die Dichteinrichtung aus dem gleichen Werkstoff herzustellen wie die Endkappe eines Filterelementes, wobei die Dichteinrichtung einstückiger Bestandteil der Endkappe ist. Die derart ausgebildete Endkappe mit der Dichteinrichtung stützt sich an dem inneren Gehäusedeckel eines Filtergehäuses ab, wobei der dahingehende Gehäusedeckel von außen her über eine separate Schraubverbindung mit den sonstigen Filtergehäuseteilen verbindbar ist und die Dichteinrichtung unter Bildung einer Abdichtung entsprechend komprimiert.

Ausgehend von diesem Stand der Technik stellt sich die Erfindung die Aufgabe, neben dem Erhalt einer sicheren Verbindung des Filterelementes innerhalb des Filtergehäuses über die Halteeinrichtung die bekannten Lösungen dahingehend weiter zu verbessern, dass sie sich durch eine konstruktiv besonders einfache Bauweise auszeichnen, dementsprechend niedrige Herstellungskosten aufweisen sowie montagefreundlich sind und eine gute Abdichtung aufweisen, auch gegenüber aggressiven Medien.

Ferner stellt sich die Erfindung die Aufgabe, ein für diese Filtervorrichtung geeignetes Filterelement bereit zu stellen. Die dahingehenden Aufgaben löst eine Filtervorrichtung mit den Merkmalen des Patentanspruches 1 in seiner Gesamtheit sowie ein Filterelement mit den Merkmalen des Patentanspruches 7.

Dadurch, dass gemäß dem kennzeichnenden Teil des Patentanspruches 1 die Dichteinrichtung aus dem gleichen Werkstoff hergestellt ist wie die Endkappe und einstückiger Bestandteil derselben ist, ist es möglich, auf die konventionellen separaten Dichteinrichtungen, wie beispielsweise konventionelle O-Dichtringe, die sich zwischen Filterelement und Filterkopf als Gehäusedeckel in radialer Richtung erstrecken, zu verzichten. Auch braucht die Dichteinrichtung nicht aus Kautschukmaterialien aufgebaut zu sein, wie die bekannten Lösungen, sondern besteht aus dem Endkappenmaterial, und ist demgemäß geeignet für jedwede Art an zu filtrierendem Fluid, auch wenn es sich hierbei um aggressive Medien handelt. In Abhängigkeit des jeweils zu filtrierenden Mediums in Form des Fluids kann die Dichteinrichtung von ihrer Materialauswahl her betreffend die Endkappengestaltung entsprechend widerstandsfähig vorgegeben werden. Auch lassen sich Beschädigungen an der Dichteinrichtung bei den diversen Montagevorgängen weitestgehend vermeiden, auch wenn das Filterelement einmal im Sinne eines Verkantens schräg auf Teile der Halteeinrichtung aufgesetzt werden sollte. Dergestalt läßt sich über die Dichteinrichtung ein lang andauernder Betrieb sicherstellen.

Dadurch, dass gemäß dem kennzeichnenden Teil des Patentanspruches 7 für den Einsatz des Filterelementes in der Filtervorrichtung die Dichteinrichtung aus dem gleichen Werkstoff hergestellt ist wie die Endkappe und einstückiger Bestandteil derselben ist, und dass erfindungsgemäß die Halteeinrichtung zum lösbaren Festlegen des Filterelements entlang seiner Längsachse im Filtergehäuse angeordnet ist, ist eine auch gegenüber aggressiven Medien gute Abdichtung und einfache Montage gegeben, wenn über die Halteeinrichtung mit den Gewindegängen das Festlegen des Filterelementes innerhalb des Filtergehäuses erfolgt.

Für alle genannten Lösungen ist jedoch wesentlich, dass über eine Krafteinrichtung, die aus Teilen der Halteeinrichtung in Form der Gewindegänge von Außengewinde und Innengewinde gebildet ist, eine Verpressung der Dichteinrichtung mit ihrer Dichtkante in axialer Richtung zwischen stimseitigern Ende des Filterelementes und dem Gehäusedeckel oder Filterkopf erfolgt. Dabei besteht auch die Möglichkeit, zusätzlich eine weitere Dichteinrichtung an dem Filterkopf oder Gehäusedeckel anzuordnen, die dann in Richtung des stimseitigen Endes des Filterelementes axial wirkt.

Durch einen einfach zu bewerkstelligenden Aufschraubvorgang lässt sich das Filterelement fluidführend mit Gehäuseteilen des Filtergehäuses verbinden bzw. durch einen Abschraubvorgang auch wieder voneinander lösen. Dabei ist es dem Grunde nach unbeachtlich, ob das Außengewinde dem Filtergehäuse zugeordnet ist oder dem Filterelement. Aufgrund der Gewindecharakteristik der Halteeinrichtungslösung kann auf die bekannten Aufschiebelösungen auf einen Anschlußstutzen im Filtergehäuse verzichtet werden, was die Montagevorgänge erleichtert. Insbesondere kommt es nicht ungewollt zu einem Abrutschen des Filterelementes vom Anschlußstutzen oder zu einem Verkanten desselben auf der dahingehenden Stutzenanordnung. Die dahingehende Gewindelösung bildet die Krafteinrichtung, mit der es möglich ist, die Dichteinrichtung mit ihrer Dichtkante oder Dichtfläche gegen Teile des Filtergehäuses, insbesondere in Form des Deckelteils (Filterkopf) und/oder gegen die Endkappe des Filterelementes zu verspannen, wobei die Verpressung der Dichtkante oder der Dichtfläche der Dichteinrichtung im wesentlichen durch deren Nachgiebigkeit und Flexibilität mit bestimmt wird.

Mit der erfindungsgemäßen Lösung kann immer nur eine spezifische Art an Filterelementen in das Filtergehäuse eingesetzt werden, die eben für die genannte Gewindeverbindungslösung entsprechend hergerichtet sind. Somit ist das Einschieben von Billigelementen als Ersatzteil vermeidbar, die neben ihrer grundsätzlich schlechten Qualität häufig aufgrund ihrer wenig speziellen Anpassung für das vorgesehene Filtergehäuse Dichtigkeitsprobleme an den Fluid-Anschlußstellen mit sich bringen.

Bei einer bevorzugten Ausführungsform der erfindungsgemäßen Filtervorrichtung ist vorgesehen, dass das Außengewinde an einer Endkappe des Filterelementes und konzentrisch zu dieser angeordnet ist und dass das zugehörige Innengewinde im Filtergehäuse integriert ist. Ferner umfaßt das Außengewinde vorzugsweise eine Fluiddurchtrittsstelle im Filterelement und das Filtergehäuse ist mehrteilig aufgebaut, wobei das Innengewinde in einen Gehäusedeckel (Filterkopf) des Filtergehäuses aufgenommen ist und eine weitere Fluiddurchtrittsstelle umfaßt. Dergestalt ist das Filterelement über eine klassische Aufnahme im Filtergehäuse einsetzbar und durch einen Aufschnapp- oder Aufschraubvorgang des Deckels auf dem Filtergehäuse wird über die genannten Gewinde und Gewindestrecken die fluidführende Verbindung von einem hydraulischen Kreis zum Filterelement hergestellt. Vorzugsweise ist dabei der Anschlußstutzen des Filterelementes fußseitig von der Dichteinrichtung umfaßt.

Weitere vorteilhafte Ausführungsformen sind Gegenstand der sonstigen Unteransprüche.

Im folgenden wird die erfindungsgemäße Filtervorrichtung nebst zugeordnetem Filterelement anhand eines Ausführungsbeispiels nach der Zeichnung näher erläutert. Dabei zeigen in prinzipieller und nicht maßstäblicher Darstellung die
- Fig.1: in perspektivischer Seitenansicht einen Teil auf die erfindungsgemäße Filtervorrichtung mit abgeschraubtem Deckelteil als Filterkopf; .
- Fig.2: in perspektivischer Unteransicht das Deckelteil des Filtergehäuses nach der Fig. 1;
- Fig.3: das obere Ende der Filtervorrichtung mit eingesetztem Filterelement und aufgesetztem Deckelteil auf das sonstige topfartige Filtergehäuse.

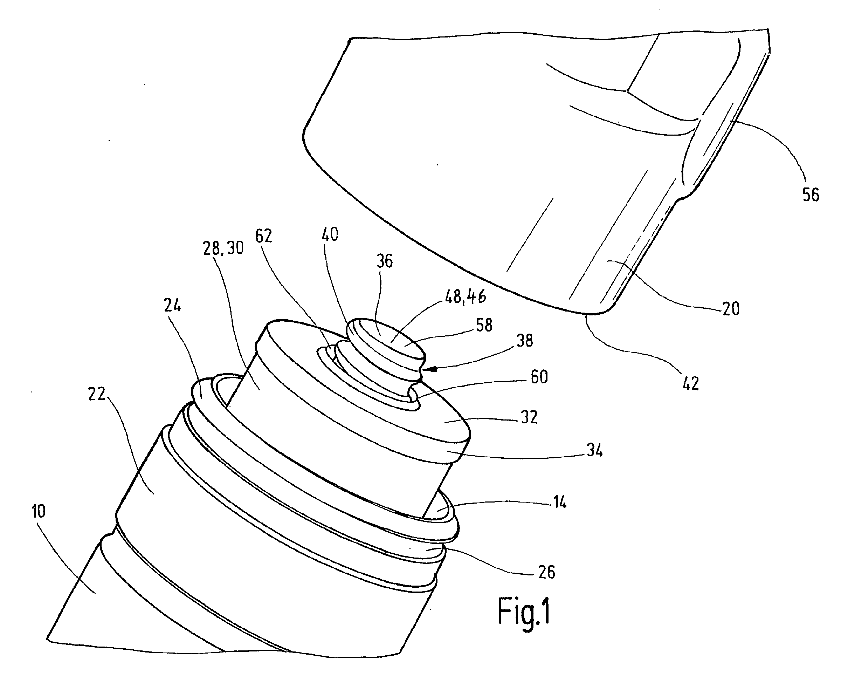

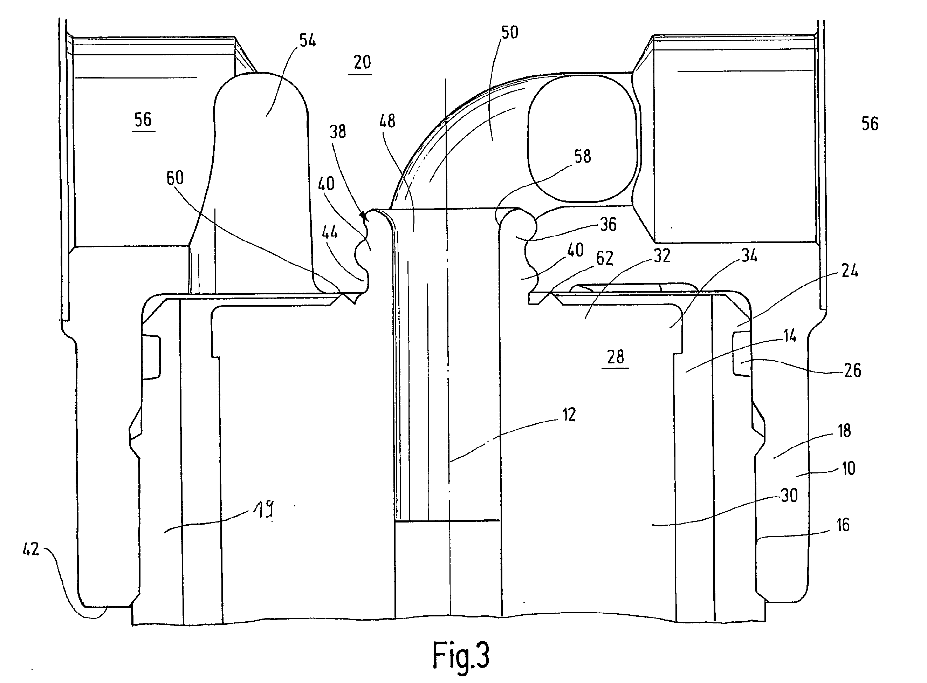

Ein Filtergehäuse 10 in Form eines in seinem Umriß zur Längsachse 12 rotationssymmetrischen Topfes weist ein offenes oberes Ende 14 sowie einen geschlossenen Boden (nicht dargestellt) auf. Am oberen Ende 14 befindet sich eine umlaufende Rastnut 16, in die in der Art einer Schnappverbindung ein Rastübergriff 18 des Deckelteils 20 des Filtergehäuses 10 eingreifen kann, wenn das Deckelteil 20 mittels einer Dreh- oder Schnappbewegung auf das obere Ende 14 des Filtergehäuses 10 aufgesetzt wird. Die dahingehende Schnapp- und Rastverbindung für den Gehäusedeckel 20 mit dem Filtergehäuse 10 ist insbesondere in der Fig.3 dargestellt. Es würde aber auch die Möglichkeit bestehen, gemäß der Darstellung nach der Fig.1 an der Stelle der Rastnut 16 eine umlaufende Erhöhung 22 vorzusehen und diese mit einer Außengewindestrecke (nicht dargestellt) zu versehen, um dergestalt den Gehäusedeckel 20 mittels einer nicht näher dargestellten Innengewindestrecke aufzuschrauben. In beiden Fällen ist jedoch gemäß der Darstellung nach der Fig.1 in Richtung des oberen Endes 14 eine vorspringende, umlaufende Dichtnase 24 angeordnet, die nach oben hin einen Dichtkanal 26 begrenzt, der ein nicht näher dargestelltes Dichtmittel, beispielsweise in Form eines O-Dichtringes od. dgl., aufnehmen kann. Gegebenenfalls ist aber eine Abdichtung über die vorspringende Dichtnase 24 ohne weitere Dichtmittel hier ausreichend.

Das topfartige Gehäuse 10 ist zur Aufnahme eines Filterelementes 28 in Form einer Filterpatrone vorgesehen, die in üblicher Weise ein kreiszylindrisches, inneres Stützrohr mit Fluiddurchlässen aufweist, das von Filtermaterial 30 umgeben ist. Beim vorliegenden Ausführungsbeispiel soll das Filterelement 28 ein dem Boden des Filtergehäuses zugeordnetes, unteres Ende aufweisen, das durch eine Kunststoffendkappe geschlossen ist, die auch eine Einfassung für den zugewandten Endrand des Filtermaterials 30 bildet. Die dahingehende, nicht näher dargestellte Endkappe kann mit dem Stützrohr einstückig aus Kunststoff preßgeformt sein. Die dahingehende untere Endkappe ist geschlossen, also fluiddicht ausgeführt, und braucht nur innerhalb des Filtergehäuses 10 in Richtung seines Bodens unter Beibehalten eines axialen Abstandes eingesetzt zu sein. Es wäre hier aber auch denkbar, übliche Halte- und Aufnahmeeinrichtungen einzusetzen, wie sie Stand der Technik sind. An seinem, dem oberen Ende 14 des Filtergehäuses 10 zugeordneten Ende ist das Filtermaterial 30 nebst Stützrohr durch eine vorzugsweise aus Kunststoff preßgeformte Kopf- oder Endkappe 32 verlängert, die ebenfalls eine Randeinfassung 34 für den angrenzenden Rand des Filtermaterials 30 sowie einen Anschlußstutzen 36 bildet.

Der dahingehende Anschlußstutzen 36 ist Teil einer als Ganzes mit 38 bezeichneten Halteeinrichtung, die längs des Anschlußstutzens 36 ein Außengewinde 40 aufweist. Hierzu korrespondierend ist im Gehäusedeckel 20 gegenüber seinem freien Rand 42 zurückversetzt ein Innengewinde 44 vorhanden, das in Richtung der Längsachse 12 der Filtervorrichtung ausgerichtet ist. Die eigentlichen Halteelemente 46 der Halteeinrichtung 38 bestehen dann insoweit aus den zugehörigen Gewindegängen von Außengewinde 40 und Innengewinde 44.

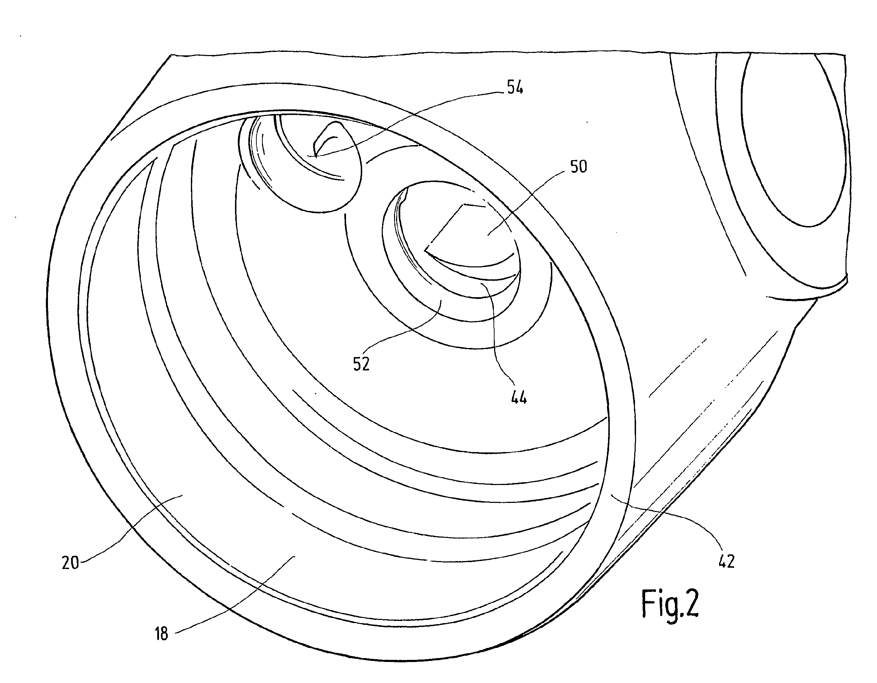

Wie des weiteren die Fig.1 und 3 zeigen, ist das Außengewinde 40 an der Endkappe 32, die man auch mit Elementdeckel bezeichnet, konzentrisch zu dieser angeordnet, wobei das zugehörige Innengewinde 44 im Bodenteil des Gehäusedeckels 20 integriert ist. Der Anschlußstutzen 36 und mithin das Außengewinde 40 umfassen konzentrisch eine Fluiddurchtrittsstelle 48 im Filterelement 28. Das im Gehäusedeckel 20 integrierte Innengewinde 44 begrenzt eine weitere Fluiddurchtrittsstelle 50, wobei die zuordenbare Innengewindestrecke Bestandteil einer Einsetzbuchse 52 (vgl. Fig.2) sein kann, die in eine zuordenbare Bohrung im Gehäusedeckel 20 einsetzbar ist und in der Art einer Preß- oder Klemmhülse auch aus einem Kunststoffmaterial bestehen kann. Neben der weiteren Fluiddurchtrittsstelle 50 weist das Deckelteil 20 eine Fluideinlaßstelle 54 für verschmutztes Fluid auf.

Einströmendes, verschmutztes Fluid, insbesondere Hydraulikmedium, gelangt dann dergestalt bei aufgesetztem Gehäusedeckel 20 auf das sonstige Filtergehäuse 10 über die Fluideinlaßstelle 54 in das Innere des Filtergehäuses 10 und durchströmt dergestalt von außen nach innen das Filterelement 28. Die abzureinigenden Verschmutzungen verbleiben dann dergestalt im Filtermaterial 30 des Filterelementes 28 und das dann innerhalb des Stützrohres gesammelte, gereinigte Fluid verläßt über die Fluiddurchtrittsstelle 48 sowie die weitere Fluiddurchtrittsstelle 50 das Filtergehäuse 10 mit Gehäusedeckel 20. Es ist selbstredend, dass für seine Filterfunktion die Filtervorrichtung über Anschlußstellen 56 an einen hydraulischen Kreis (nicht dargestellt) anzuschließen ist.

Für eine preiswert zu erhaltende Abdichteinrichtung hat es sich als günstig erwiesen, die Gewindegänge von Außengewinde 40 und zuordenbarem Innengewinde 44 als sog. Rundgewinde auszubilden. Ferner ist, um eine steife Anordnung zu gewährleisten, der Anschlußstutzen 36 im Durchmesser ebenso klein gehalten wie in der Bauhöhe; insbesondere ist er im Durchmesser um ein Mehrfaches gegenüber dem Außendurchmesser der Endkappen 32 kleiner gehalten. Um günstige Strömungsverhältnisse zu schaffen, ist darüber hinaus das freie Ende des Anschlußstutzens 36 innenumfangsseitig mit einer trichterförmigen Wölbung 58 versehen. Des weiteren ist der Anschlußstutzen 36 an seiner fußseitigen Übergangsstelle zur Endkappe 32 mit einer konzentrisch verlaufenden Dichteinrichtung 60 umgeben. Wie insbesondere die Fig.3 zeigt, ist die Dichteinrichtung 60 im Querschnitt dreieckförmig ausgebildet und dichtet mit einer spitz zulaufenden Dichtkante 62 in Richtung des Bodens des Gehäusedeckels 20 ab, sofern dieser auf das sonstige Filtergehäuse 10 aufgesetzt ist (vgl. Fig.3).

Die dahingehende Dichtkante 62 kann geringfügig verpreßt werden, sofern beim Festlegen des Gehäusedeckels 20 dieser über die Halteelemente 46 in Form der Gewindegänge in Richtung des Filterelementes 28 sowie des Filtergehäuses 10 gezogen wird. Mittels der Halteeinrichtung 38 erfolgt also eine form- und kraftschlüssige Fluidverbindung zwischen Filterelement 28 und Gehäusedeckel 20, wobei die Dichteinrichtung 60 unter Anlage mit dem Gehäusedeckel 20 kraftschlüssig verpreßt ist. Dadurch, dass an der Endkappe 32 mit dem Gewindeanschlußstutzen 36 die Dichteinrichtung 60 mit Dichtkante 62 angeordnet ist, ist dergestalt die Dichtung zwischen Filterelement 28 und Filterkopf in Form des Gehäusedeckels 20 realisiert. Somit entfallen die sonstigen empfindlichen Dichtungsmaterialien, beispielsweise aus Kautschuk, die in der Art eines O-Ringes ansonsten die Abdichtfunktion gewährleisten sollen. Da die Dichteinrichtung 60 aus dem gleichen Werkstoff hergestellt ist wie die Endkappe 32 und insbesondere einstückiger Bestandteil derselben ist, ist die Dichteinrichtung 60 somit für alle Hydraulikflüssigkeiten, schwer entflammbare Flüssigkeiten, aggressive Medien und für alle biologisch abbaubaren Flüssigkeiten geeignet; Medien, wo konventionelle Dichteinrichtungen, insbesondere aus Kautschukmaterial, eine Abdichtfunktion lang andauernd nicht mehr gewährleisten können.

Da das Filterelement 28 definiert über die Gewindestrecke im Gehäusedekkel 20 und mithin im Filterkopf aufgenommen ist, kann es bei den Montage- und Demontagevorgängen, beispielsweise um ein verbrauchtes Filterelement 28 gegen ein neues auszutauschen, nicht dazu führen wie im Stand der Technik, dass es ungewollt zu Abrutschvorgängen am Anschlußstutzen 36 kommt. Vielmehr ist eine genau beherrschbare Anlagesituation gegeben und bei verrastetem Gehäusedeckel 20 auf der Filtergehäuseseite 10 ist sichergestellt, dass auch die fluidführende Verbindung im Inneren der Filtervorrichtung hergestellt ist. Vorzugsweise wird hierbei für einen Einsatzvorgang zunächst das Filterelement in das Deckelteil eingeschraubt und dann dieses mit dem Filtergehäuse 19 verrastet. Darüber hinaus ist für die erfindungsgemäße Filtervorrichtung ein definiertes Filterelement 28 von seiner konstruktiven Anschluß-Ausgestaltung her notwendig, so dass es nicht möglich ist, etwaige Billigelemente in bestehende Filtervorrichtungsgehäuse einzuschieben, die ansonsten aufgrund von Abdichtigkeitsproblemen die Funktion der Filtervorrichtung in Frage stellen können.

Die Dichteinrichtung 60 ist von ihrer Bauhöhe derart gewählt, dass sie am fußseitigen Auslauf der Gewindestrecke des Außengewindes 40 in der Art eines Rundgewindes um die Hälfte eines Gewindeganges vorsteht. Es besteht aber auch die Möglichkeit, anstelle des Rundgewindes ein anderes metrisches Gewinde einzusetzen. Des weiteren können mehrere Dichtringe - auch in anderer geometrischer Ausgestaltung - in konzentrischer Anordnung und gegebenenfalls in unterschiedlicher Dichthöhe den Anschlußstutzen 36 umfassen. Ferner liegt es noch im Bereich der Erfindung, die Anordnung von Außen- und Innengewinde zu tauschen, so dass dann der Gehäusedeckel 20 das Außengewinde aufweist und die Endkappe 32 des Filterelementes 28 das Innengewinde 44 (nicht dargestellte Lösung). Neben der beschriebenen Krafteinrichtung in Form der Gewindestrecken der Halteeinrichtung besteht auch die Möglichkeit, kraftschlüssig, beispielsweise über ein Federelement in Form einer Druckfeder, vergleichbar der Lösung nach der Fig.5 der EP 0 891 214 B1 gegen einen Anschlußstutzen im Filterkopf oder Deckelteil des Filtergehäuses zu verspannen und dergestalt in axialer Richtung eine Dichtkraft auf die Dichteinrichtung auszuüben.

## Patentansprüche

1. Filtervorrichtung mit einem topfartigen Filtergehäuse (10), einem in diesem aufnehmbaren Filterelement (28) mit mindestens einer Endkappe (32) und einer zum lösbaren Festlegen des Filterelementes entlang seiner Längsachse (12) im Filtergehäuse (10) angeordneten Halteeinrichtung (38), die an der Innenseite des Filtergehäuses (10) und am Filterelement (28) ausgebildete, miteinander zusammenwirkende Halteelemente (46) aufweist, die aus den zugehörigen Gewindegängen eines Außen (40)- und eines Innengewindes (44) gebildet sind, und mit einer Dichteinrichtung (60), die zwischen einem Gehäusedeckel (20) des Filtergehäuses (10) und dem Filterelement (28) die Abdichtung vornimmt, wobei die Dichteinrichtung (60) mindestens eine Dichtkante (62) oder Dichtfläche aufweist, die in axialer Richtung parallel zur Längsachse (12) angeordnet unter dem Einfluß der Halteeinrichtung (38) verpreßt die Abdichtung vornimmt, **dadurch gekennzeichnet, dass** die Dichteinrichtung (60) aus dem gleichen Werkstoff hergestellt ist wie die Endkappe (32) und einstückiger Bestandteil derselben ist.

2. Filtervorrichtung nach Anspruch 1, **dadurch gekennzeichnet, dass** das Außengewinde (40) an einer Endkappe (32) und konzentrisch zu dieser angeordnet ist und dass das zugehörige Innengewinde (44) im Filtergehäuse (10) integriert ist.

3. Filtervorrichtung nach Anspruch 2, **dadurch gekennzeichnet, dass** das Außengewinde (40) eine Fluiddurchtrittsstelle (48) im Filterelement (28) umfaßt.

4. Filtervorrichtung nach Anspruch 2, **dadurch gekennzeichnet, dass** das Filtergehäuse (10) mehrteilig aufgebaut ist und dass das Innengewinde (44) in einem Gehäusedeckel (20) des Filtergehäuses (10) aufgenommen ist und eine weitere Fluiddurchtrittsstelle (50) umfaßt.

5. Filtervorrichtung nach Anspruch 4, **dadurch gekennzeichnet, dass** die Dichteinrichtung (60) die Halteeinrichtung (38) an der Stelle des Überganges zum Filterelement (28) umfasst.

6. Filtervorrichtung nach einem der Ansprüche 1 bis 5, **dadurch gekennzeichnet, dass** die zugehörigen Gewindegänge (46) als Rundgewinde ausgebildet sind.

7. Filterelement für den Einsatz in einer Filtervorrichtung nach einem der Ansprüche 1 bis 6, wobei an mindestens einem Ende des Filterelementes (28) eine Endkappe (32) mit einem Teil einer Halteeinrichtung (38) aufgesetzt ist, die aus den zugehörigen Gewindegängen eines Außen (40)- oder eines Innengewindes gebildet ist, und die an ihrer dem Filterelement (28) abgewandten Seite eine Dichteinrichtung (60) aufweist, die in der Art eines geschlossenen Ringes ausgebildet mit einer Dichtkante (62) oder Dichtfläche in Richtung parallel zur Längsachse (12) des Filterelementes (28) angeordnet ist, **dadurch gekennzeichnet, dass** die Dichteinrichtung (60) aus dem gleichen Werkstoff hergestellt ist wie die Endkappe (32) und einstückiger Bestandteil derselben ist.

8. Filterelement nach Anspruch 7, **dadurch gekennzeichnet, dass** das Außengewinde (40) der Endkappe (32) sich längs eines Anschlußstutzens (36) erstreckt, der die eine Fluiddurchtrittsstelle (48) umfaßt.

## Claims

1. A filtering apparatus with a cup-like filter housing (10), a filter element (28) which can be held therein and having at least one end cap (32), and a holding means (38) which is located in the filter housing (10) for detachable fixing of the filter element along its longitudinal axis (12) and which has holding elements (46) which interact with one another and which are formed on the inside of the filter housing (10) and on the filter element (28) and which are formed from the corresponding thread turns of an inner (40) and an outer thread (44), and with a sealing means (60) which effects sealing between a housing cover (20) of the filter housing (10) and the filter element (28), the sealing means (60) having at least one sealing edge (62) or sealing surface which, located in the axial direction parallel to the longitudinal axis (12), seals under the influence of the pressure applied thereto by the holding means (38), **characterised in that** the sealing means (60) is produced from the same material as the end cap (32) and is a one-part component of the same.

2. The filtering apparatus according to Claim 1, **characterised in that** the outer thread (40) is located on an end cap (32) and concentrically to it, and that the corresponding inner thread (44) is integrated into the filter housing (10).

3. The filtering apparatus according to Claim 2, **characterised in that** the outer thread (40) encompasses a fluid passage site (48) in the filter element (28).

4. The filtering apparatus according to Claim 2, **characterised in that** the filter housing (10) is made in several parts and that the inner thread (44) is held in a housing cover (20) of the filter housing (10) and encompasses another fluid passage site (50).

5. The filtering apparatus according to Claim 4, **characterised in that** the sealing means (60) encompasses the holding means (38) at the transition point to the filter element (28).

6. The filtering apparatus according to any of Claims 1 to 5, **characterised in that** the corresponding thread turns (46) are made as a round thread.

7. A filter element for use in a filtering apparatus according to any of Claims 1 to 6, wherein on at least one end of the filter element (28) an end cap (32) is placed with part of a holding means (38) which is formed from the corresponding thread turns of an outer (40) or an inner thread, and which on its side facing away from the filter element (28) has a sealing means (60) which, formed in the manner of a closed ring with a sealing edge (62) or sealing surface, is arranged in the direction parallel to the longitudinal axis (12) of the filter element (28), **characterised in that** the sealing means (60) is produced from the same material as the end cap (32) and is a one-part component of the same.

8. The filter element according to Claim 7, **characterised in that** the outer thread (40) of the end cap (32) extends along a connecting branch (36) which encompasses the fluid passage site (48).

## Revendications

1. Dispositif de filtration ayant un corps (10) de filtre de type en pot, un élément (28) filtrant pouvant y être reçu et ayant au moins une coiffe (32) d'extrémité et un dispositif (38) de maintien monté pour la fixation amovible de l'élément filtrant le long de son axe (12) longitudinal dans le corps (10) du filtre, dispositif (38) de maintien qui a des éléments (46) de maintien, qui sont constitués sur la face intérieure du corps (10) du filtre et sur l'élément (28) filtrant, qui coopèrent entre eux et qui sont formés des filets associés d'un filetage (40) et d'un taraudage (44), et comprenant un dispositif (60) d'étanchéité, qui assure l'étanchéité entre un couvercle (20) du corps (10) du filtre et l'élément (28) filtrant, le dispositif (60) d'étanchéité ayant au moins un bord (62) d'étanchéité ou une surface d'étanchéité, qui, disposé dans la direction axiale parallèlement à l'axe (12) longitudinal en étant pressé sous l'influence du dispositif (38) de maintien, assure l'étanchéité, **caractérisé en ce que** le dispositif (60) d'étanchéité est fabriqué en un même matériau que la coiffe (32) d'extrémité et en est une partie constituante d'une seule pièce.

2. Dispositif de filtration suivant la revendication 1, **caractérisé en ce que** le filetage (40) est disposé sur une coiffe (32) d'extrémité en y étant concentrique et **en ce que** le taraudage (44) associé est intégré au corps (10) du filtre.

3. Dispositif de filtration suivant la revendication 2, **caractérisé en ce que** le filetage (40) comprend un point (48) de passage de fluide dans l'élément (28) filtrant.

4. Dispositif de filtration suivant la revendication 2, **caractérisé en ce que** le corps (10) du filtre est en plusieurs parties et **en ce que** le taraudage (44) est reçu dans un couvercle (20) du corps (10) du filtre et comprend un autre point (50) de passage de fluide.

5. Dispositif de filtration suivant la revendication 4, **caractérisé en ce que** le dispositif (60) d'étanchéité comprend le dispositif (38) de maintien à l'emplacement de la transition vers l'élément (28) filtrant.

6. Dispositif de filtration suivant l'une des revendications 1 à 5, **caractérisé en ce que** les filets (46) associés sont constitués sous la forme de filets ronds.

7. Elément filtrant à utiliser dans un dispositif de filtration suivant l'une des revendications 1 à 6, dans lequel il est mis, sur au moins une extrémité de l'élément (28) filtrant, une coiffe (32) d'extrémité ayant une partie d'un dispositif (38) de maintien qui est formée des filets associés d'un filetage (40) ou d'un taraudage et qui ont, sur leur côté éloigné de l'élément (28) filtrant, un dispositif (60) d'étanchéité, qui, en étant constitué à la manière d'un anneau fermé ayant un bord (62) d'étanchéité ou une surface d'étanchéité, est disposé dans la direction parallèlement à l'axe (12) longitudinal de l'élément (28) filtrant, **caractérisé en ce que** le dispositif (60) d'étanchéité est fabriqué en un même matériau que la coiffe (32) d'extrémité et en est une partie constituante d'une seule pièce.

8. Elément filtrant suivant la revendication 7, **caractérisé en ce que** le filetage (40) de la coiffe (32) d'extrémité s'étend le long d'une tubulure (36) de raccord, qui comprend un point (48) de passage de fluide.
